# FASCICULE DE BREVET EUROPEEN

(11) **EP 2 602 534 B1**
(45) Date de publication et mention de la délivrance du brevet: **12.06.2019**
(21) Numéro de dépôt: 12195658.5
(22) Date de dépôt: 05.12.2012
(51) Int. Cl.: F16B 39/22, F16C 19/06, F16C 19/52, F16C 33/58, F16C 33/66, F16C 37/00, F16N 7/00, F16N 11/00, F16N 11/10, F16N 17/00

(54) **Dispositif d'injection de fluide, et système mécanique équipé d'un tel dispositif**
Fluid injection device, and mechanical system provided with such a device
Einspritzungsgerät, und mit solchem Gerät vorgesehene mechanische Vorrichtung

(30) Priorité: 06.12.2011 FR 1161230
(43) Date de publication de la demande: 12.06.2013
(73) Titulaire: SKF Aeroengine France, 78180 Montigny le Bretonneux (FR)
(72) Inventeur: Carrerot, Hervé, 59970 Vicq (FR)
(74) Mandataire: Lavoix

(56) Documents cités:
- FR-A- 1 440 498
- FR-A1- 2 890 106
- FR-A1- 2 911 168

## Description

La présente invention concerne un dispositif d'injection d'un fluide dans un système mécanique, par exemple un roulement, un palier ou une rotule. L'invention concerne également un système mécanique équipé d'un tel dispositif. Le domaine de l'invention est celui des systèmes de sécurité, en particulier dans le domaine aéronautique.

Des systèmes mécaniques du type roulement, palier ou rotule sont couramment intégrés à tous types d'équipements automobiles, ferroviaires, aéronautiques ou machines industrielles. Par exemple, le système mécanique peut être un roulement à billes intégré à un équipement aéronautique, tel qu'un rotor d'hélicoptère.

De manière connue, un tel système mécanique est susceptible de subir des échauffements en fonctionnement. Au dessus d'une température critique, certains éléments constitutifs du système peuvent être irrémédiablement endommagés. Le fonctionnement de l'équipement auquel le système est intégré est alors gêné, voire brutalement stoppé. Dans certains cas, un tel dysfonctionnement peut donc provoquer un accident grave.

Afin d'empêcher ou ralentir l'échauffement des systèmes mécaniques, il est connu de nombreux dispositifs de lubrification. Par ailleurs, le système mécanique peut être muni de dispositifs de signalement, tels que des capteurs de température, permettant d'anticiper un échauffement critique.

WO-A-2008 107 579 décrit un système mécanique équipé d'un dispositif autonome d'injection d'un fluide, en particulier un fluide de lubrification ou de refroidissement, dans le système en cas d'échauffement. Le dispositif comprend une charge pyrotechnique thermo-initiable génératrice de gaz de combustion disposée dans un logement. Le fluide est contenu dans un réservoir séparé, d'une part, de la charge par un piston mobile et, d'autre part, du système par un opercule. En atteignant une température prédéterminée d'allumage, la charge subit une combustion et les gaz générés pressurisent le fluide dans le réservoir. L'opercule se rompt sous la pression du fluide, qui est alors injecté dans le système mécanique. La structure et le fonctionnement du dispositif, ainsi que sa liaison thermique avec le système, sont détaillées par WO-A-2008 107 579. Toutefois, les conditions d'intégration du dispositif au système ne sont pas entièrement satisfaisantes. FR2911168 A1 décrit un autre exemple de dispositif autonome d'injection d'un fluide.

Le but de la présente invention est de proposer un dispositif amélioré d'injection d'un fluide de lubrification ou de refroidissement. En particulier, l'invention vise un dispositif performant et fiable dans des conditions de fonctionnement exigeantes, tout en étant peu coûteux et simple à mettre en oeuvre.

A cet effet, l'invention a pour objet un dispositif d'injection d'un fluide dans un système mécanique susceptible de subir un échauffement, le dispositif comprenant au moins :
- un corps contenant une charge thermo-initiable génératrice de gaz de combustion, un allumage de la charge étant initiable sous l'action d'une commande d'allumage et/ou sous l'effet d'un apport de chaleur, depuis une zone d'échauffement du corps, vers la charge,
- un réservoir contenant le fluide,
- des moyens de fixation du dispositif au système mécanique, les moyens de fixation étant adaptés pour mettre le réservoir en communication fluidique avec le système mécanique, et
- des moyens de délivrance du fluide pressurisé hors du réservoir par l'action, directe ou via des moyens intermédiaires, des gaz de combustion.
Le dispositif est caractérisé en ce que les moyens de fixation comprennent au moins une douille d'injection munie d'un filetage externe revêtu d'un film adhésif anti-desserrage, en ce que a douille d'injection est constituée par un matériau présentant, d'une part, une limite d'élasticité à 0,2% de déformation Re₀,₂ comprise entre 500 et 700 MPa et, d'autre part, une résistance à la traction Rmax comprise entre 700 et 900 MPa,
en ce que les moyens de délivrance du fluide pressurisé hors du réservoir comprennent un opercule non fragmentable, qui obture initialement le réservoir et se rompt lorsque la pression du fluide dans le réservoir dépasse un seuil de pression prédéterminé,
en ce que l'opercule est localisé dans un volume délimité par le filetage externe de la douille d'injection, et
en ce que le débit de fluide pressurisé hors du réservoir est régulé, avec soit une délivrance du fluide régulière et continue sur une durée de plusieurs minutes, soit une délivrance du fluide par intermittence, par injection successives, sur plusieurs minutes.

Ainsi, l'invention permet d'améliorer à la fois la résistance du dispositif aux sollicitations vibratoires, l'étanchéité entre le dispositif et le système mécanique et la précision de délivrance du fluide dans le système. Le dispositif est configuré pour fonctionner selon au moins un mode de délivrance de fluide, avantageusement prédéterminé(s) en fonction de l'application visée. Le dispositif assure une intervention rapide en cas d'échauffement du système, en particulier dans le cas d'un système susceptible de subir en service un échauffement de contact entre ses éléments constitutifs. Ainsi, les dommages potentiellement subis par les éléments constitutifs du système sous l'effet d'un échauffement critique sont limités.

D'autres caractéristiques avantageuses du dispositif selon l'invention, prises isolément ou en combinaison, sont définies aux revendications 2 à 6.

L'invention a également pour objet un système mécanique tel que défini à la revendication 7.

D'autres caractéristiques avantageuses du système selon l'invention, prises isolément ou en combinaison sont définies aux revendications 8 à 11.

L'invention sera mieux comprise à la lecture de la description qui va suivre, donnée uniquement à titre d'exemple non limitatif et faite en référence aux dessins annexés sur lesquels :
- la figure 1 est une vue en perspective d'un dispositif autonome d'injection de fluide, ce dispositif étant conforme à l'invention ;
- la figure 2 est une coupe axiale du dispositif dans le plan II à la figure 1, équipant un système mécanique, partiellement représenté, également conforme à l'invention ;
- la figure 3 est une coupe à plus petite échelle du dispositif et du système de la figure 1, intégré à un banc d'essai mis en oeuvre lors d'une phase préparatoire de fabrication du dispositif ;
- la figure 4 est un graphique illustrant le fonctionnement du dispositif des figures 1 à 3 ;
- la figure 5 est un autre graphique illustrant le fonctionnement du dispositif des figures 1 à 3, avec un paramétrage différent ;
- la figure 6 est une coupe d'un autre système mécanique, équipé de trois dispositifs des figures 1 à 3 ;
- la figure 7 est un graphique illustrant le fonctionnement des dispositifs et du système de la figure 6 ;
- la figure 8 une coupe analogue à la figure 5 d'un autre système mécanique, équipé de quatre dispositifs conformes à un deuxième mode de réalisation de l'invention ;
- la figure 9 est une coupe analogue à la figure 2 d'un dispositif conforme à un troisième mode de réalisation de l'invention ;
- la figure 10 est une coupe analogue à la figure 2 d'un dispositif conforme à un quatrième mode de réalisation de l'invention ;
- la figure 11 est une coupe analogue à la figure 2 d'un dispositif conforme à un cinquième mode de réalisation de l'invention, équipant un autre système mécanique également conforme à l'invention ; et
- la figure 12 est une coupe analogue à la figure 11 d'un dispositif conforme à un sixième mode de réalisation de l'invention, équipant un autre système mécanique également conforme à l'invention.

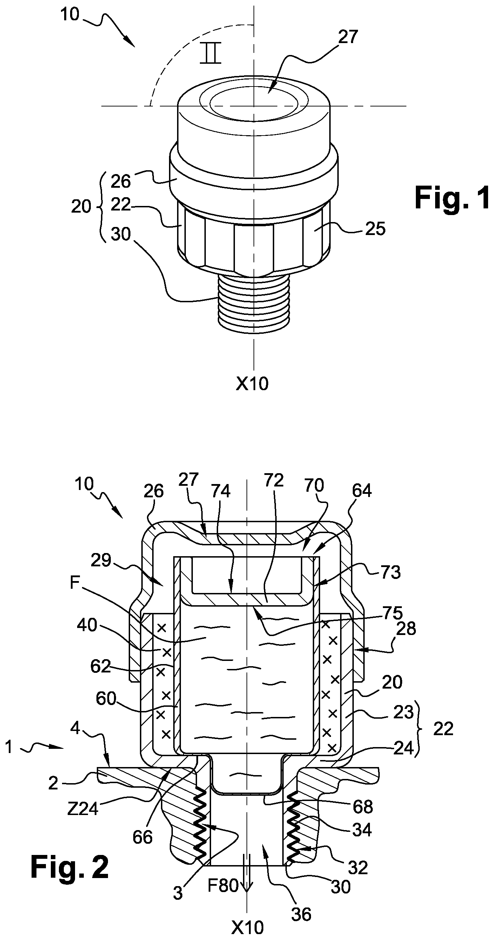

Sur les figures 1 à 3 est représenté un dispositif autonome 10, conforme à l'invention, d'injection d'un fluide F.

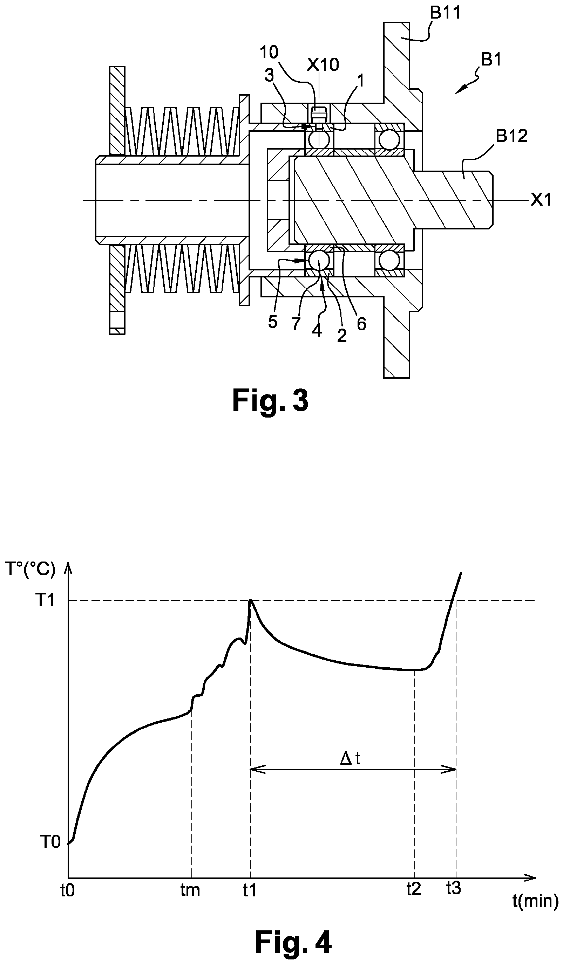

Plus précisément, le dispositif 10 est une cartouche miniaturisée destinée à équiper un système mécanique 1, également conforme à l'invention, susceptible de subir un échauffement. Le système 1 est, d'une part, partiellement représenté à la figure 2 dans un but de simplification et, d'autre part, entièrement représenté à la figure 3, en étant intégré à un banc d'essai B1.

Sur l'exemple des figures 2 et 3, le système 1 est du type roulement à billes, avec une bague externe 2 et une bague interne 6, respectivement fixe et tournante en fonctionnement du banc B1. Un orifice 3 au moins partiellement taraudé traverse la bague 2, reliant une surface extérieure 4 et un espace intérieur 5 à cette bague 2. A l'intérieur 5 du système 1 sont logées des billes de roulement 7, suivant une piste de roulement ménagée entre les bagues 2 et 6. De préférence, les bagues 2 et 6 sont fabriquées dans un acier à dureté très élevée, présentant une résistance à la traction comprise entre 2400 et 2600 mégapascals (MPa), encore de préférence de l'ordre de 2500 MPa. Le banc B1 comprend une partie fixe B11 solidaire de la bague 2 et une partie mobile B12 solidaire de la bague 6. Ainsi, la partie B12 et la bague 6 peuvent être entraînées en rotation autour d'un axe X1, le système 1 assurant alors sa fonction de roulement.

En fonctionnement du système 1, la cartouche 10 vise à protéger l'intérieur 5 et les éléments mobiles 6 et 7 des échauffements. A cet effet, le fluide F est, d'une part, initialement contenu dans la cartouche 10 au repos et, d'autre part, injecté depuis la cartouche 10 vers le système 1, sous certaines conditions opérationnelles, en fonctionnement du système 1 et de la cartouche 10.

En variante non représentée, le système 1 peut être un autre système mécanique susceptible de subir des échauffements, par un exemple une rotule ou un palier.

Selon une autre variante non représentée, la cartouche 10 peut être positionnée en un autre emplacement du système 1, par exemple sur une face avant.

La cartouche 10 comprend un corps 20, une douille 30 de fixation de la cartouche 10 au système mécanique 1, une charge thermo-initiable 40 potentiellement génératrice de gaz de combustion, un réservoir 60 adapté pour contenir le fluide F, des moyens 68 de délivrance du fluide F hors du réservoir 60, ainsi que des moyens intermédiaires 70 de compression du fluide F dans le réservoir 60. La cartouche 10 présente globalement une symétrie axiale autour d'un axe central X10.

Le corps 20 est centré sur l'axe X10 et comprend une base 22, un capuchon 26, ainsi que la douille 30 solidaire de la base 22. La base 22 comprend une paroi cylindrique 23 centrée sur l'axe X10 et une paroi radiale 24 perpendiculaire à l'axe X10. Optionnellement, la paroi 23 présente une surface extérieure munie de stries 25 facilitant la manipulation du corps 20. Une zone d'échauffement Z24 est délimitée du côté extérieur de la paroi 24, autour de la douille 30. Cette zone Z24 est prévue pour être positionnée au contact de la surface extérieure 4 du système 1, afin qu'un transfert thermique puisse s'effectuer à travers la paroi 24 depuis le système 1 vers la charge 40. La base 22 est de préférence réalisée dans un matériau métallique à forte conductivité thermique, tel qu'un alliage de cuivre, de zinc et/ou d'aluminium, par exemple du laiton.

Le capuchon 26 forme une cuvette, dont la section dans un plan contenant l'axe X10 forme globalement un U inversé. La base 22 et le capuchon 26 délimitent ensemble un logement 29 ménagé à l'intérieur du corps 20. Dans le logement 29 sont disposés la charge 40, les moyens 70 et le réservoir 60 contenant le fluide F, le reste étant initialement rempli d'air non pressurisé. La base 22 et le capuchon 26 sont assemblés l'un avec l'autre et solidarisés au niveau d'une zone de jonction 28, par exemple par soudage ou collage. Sur l'exemple de la figure 2, la paroi du capuchon 26 recouvre partiellement la paroi 23 de la base 22. A titre d'exemple non limitatif, le diamètre maximal du corps 20 au niveau de la zone de jonction 28 est de l'ordre de 20 millimètres. Le capuchon 26 peut être fabriqué dans un matériau moins coûteux que la base 22.

De préférence, le capuchon 26 comprend à son sommet, autrement dit au creux du U, une partie 27 déformable sous l'effet d'une pression interne au corps 20, lorsque les gaz de combustion de la charge 40 se diffusent dans le logement 29. La résistance mécanique de la partie 27 peut être réduite sous l'effet d'un traitement thermique préalable au montage du capuchon 26 sur la base 22, ou en diminuant l'épaisseur de la partie 27 par rapport au reste du capuchon 26, ou par tout autre moyen adapté à la présente application. En alternative, la partie 27 peut être un élément rapporté sur le capuchon 26, par exemple en matière plastique déformable plastiquement sans rupture sous la pression et la température des gaz de combustion de la charge 40. Ainsi, la combustion de la charge 40 peut être détectée visuellement depuis l'extérieur de la cartouche 10, par exemple lors d'une opération de maintenance, la partie 27 étant alors déformée vers l'extérieur du corps 20.

La douille 30 est solidaire de la base 22 et s'étend en saillie depuis la paroi 24, du côté opposé au capuchon 26. Plus précisément, la douille 30 forme une paroi cylindrique centrée sur l'axe X10 et comportant, d'une part, un filetage externe 32 et, d'autre part, un alésage interne délimitant un conduit 36 de délivrance du fluide F en dehors de la cartouche 10. A titre d'exemple non limitatif, le diamètre externe de la douille 30 est de l'ordre de 6 millimètres. Afin d'assurer une fixation optimale de la cartouche 10 au système 1, le filetage externe 32 est revêtu d'un film adhésif anti-desserrage 34 puis vissé dans l'orifice 3 correspondant du système 1, avec un couple maîtrisé. L'orifice 3, prévu spécifiquement pour recevoir la douille 30, est au moins partiellement taraudé. A titre d'exemple non limitatif, le film 34 appliqué sur le filetage 32 peut être une colle ou une pâte adhésive à fort pouvoir fixant, notamment une colle cyanoacrylate.

Le corps 20 et notamment la douille 30 sont configurés pour assurer une efficacité optimale en fonctionnement de la cartouche 10 et du système mécanique 1. En particulier, le matériau et l'étendue de la zone Z24, le matériau et les dimensions de la douille 30, la précision dimensionnelle et la résistance mécanique du filetage 32, la nature et la quantité de film 34 appliqué sur le filetage 32, ainsi que le couple de serrage de la douille filetée 30 dans l'orifice 3 du système 1, revêtent une importance particulière pour la mise en oeuvre de la cartouche 10. La douille 30 permet d'intégrer la cartouche 10 au système 1 en assurant une résistance satisfaisante de la cartouche 10 aux sollicitations vibratoires qui lui sont transmises par le système 1, une étanchéité satisfaisante du système 1 au niveau de l'orifice 3, ainsi que la délivrance du fluide F en une zone précise de l'intérieur 5 du système 1. La zone Z24 permet un allumage rapide et précis de la charge 40 en réponse à un échauffement critique du système 1. Ainsi, la cartouche 10 présente un temps de réponse réduit, assure une intervention rapide en cas d'échauffement du système 1 et limite les dommages potentiellement subis par les éléments constitutifs du système 1 sous l'effet d'un échauffement critique.

Avantageusement, la douille 30 est fabriquées dans un matériau présentant une limite d'élasticité à 0,2% de déformation Re₀,₂ comprise entre 500 et 700 mégapascal (MPa), de préférence entre 550 et 650 MPa, encore de préférence de l'ordre de 600 MPa. En outre, le matériau de la douille présente une résistance à la traction Rmax comprise entre 700 et 900 MPa, de préférence entre 750 et 850 MPa, encore de préférence de l'ordre de 800 MPa. De telles caractéristiques mécaniques peuvent être obtenue par exemple avec un alliage d'acier, avec ou sans traitement thermique. Ainsi, la douille 30 et son filetage 32 présentent une résistance satisfaisante aux contraintes mécaniques, vibratoires et thermiques subies au contact du système 1.

En complément, un élément de freinage positif, non représenté, peut être intégré au système 1. Cet élément est par exemple du type frein tôle ou fil à freiner et coopère avec la cartouche 10, afin d'éviter un dévissage de cette cartouche 10 sous l'action des vibrations en fonctionnement du système 1.

Le réservoir 60 comprend une paroi cylindrique 62 qui est centrée sur l'axe X10 et qui s'étend entre une extrémité ouverte munie d'une ouverture circulaire 64 et une extrémité fermée constituée par une paroi radiale 66. De préférence, le réservoir 60 convenant au stockage du fluide F est composé d'un matériau à plus faible conductivité thermique que le matériau du corps 20 accueillant la charge 40. Ainsi, le fluide F à injecter peut être préservé de tout échauffement pouvant provenir des échauffements du système 1 à protéger, au niveau de la zone d'échauffement Z24. Par exemple, le réservoir 60 peut être constitué en un matériau léger, tel un plastique.

Un opercule 68, constitué par exemple d'un film plastique ou métallique frangible, est ménagé sur la paroi 66 du réservoir 60. Lorsque le réservoir 60 est positionné sur la base 22, la paroi 66 s'appuie sur la surface intérieure de la paroi 24, tandis que l'opercule 68 s'étend en saillie à l'intérieur du conduit 36, perpendiculairement à l'axe X10. L'opercule 68 est alors localisé dans un volume délimité par les contours du filetage 32, en étant avantageusement rapproché de l'extrémité de sortie du conduit 36 et de l'intérieur 5 du système 1. En alternative, l'opercule 68 peut être formé dans le même plan que la paroi 66, voire se substituer entièrement à la paroi 66. L'opercule 68 remplit une première fonction d'étanchéité du réservoir 60 et une deuxième fonction de délivrance, après rupture, du fluide F hors du réservoir 60. L'opercule 68 et le conduit 36 constituent les moyens de délivrance du fluide F hors du réservoir 60. La douille 30 peut être qualifiée de douille d'injection, dans la mesure où est elle traversée par le fluide F lors de sa délivrance.

De préférence, l'opercule 68 est non fragmentable en cas de rupture, autrement dit configuré pour se déchirer sans fragment sous l'effort de pressurisation du fluide F dans le réservoir 60. En effet, la migration de fragments d'opercule 68 vers l'intérieur 5 du système 1, via le conduit 36, risquerait d'endommager le système 1.

Sur l'exemple de la figure 2, les moyens de compression 70 sont interposés entre le fluide F et le logement 29 contenant la charge 40. Ces moyens 70 sont nécessaires lorsque le mélange des gaz de combustion au fluide F à injecter est gênant et/ou lorsque l'injection du mélange de gaz de combustion et de fluide F peut poser des problèmes. Plus précisément, les moyens 70 comprennent un piston 72 initialement positionné dans le réservoir 60 au niveau de l'ouverture 64. Le piston 72 est muni d'une paroi cylindrique latérale 73 en appui contre la paroi 62, d'un premier côté 74 orienté vers le logement 29 et d'un deuxième côté 75 orienté vers l'intérieur du réservoir 60 et le fluide F. Le deuxième côté 75 est initialement disposé au contact du fluide F, qui subit alors une pression nulle ou faible. Lors du dégagement des gaz de combustion de la charge 40, la pression augmente dans le logement 29, rompant l'équilibre entre la pression exercée par le fluide F sur le côté 75 et la pression exercée par les gaz sur le côté 74. Le piston 72 se déplace dans le réservoir 60 avec la paroi 73 qui glisse contre la paroi 62, en comprimant le fluide F jusqu'à la rupture de l'opercule 68. Ensuite, le piston 72 continue de s'enfoncer dans le réservoir 60, avec un flux F80 de fluide F qui s'échappe du réservoir 60 par l'opercule percé 68, vers le conduit 34 et le système mécanique 1.

En variante non représentée aux figures 1 et 2, les moyens 70 peuvent comprendre une membrane déformable, ou tout autre élément adapté à la présente application.

Le fluide F peut être un agent de lubrification, de protection ou de refroidissement des éléments constitutifs du système mécanique 1. Le fluide F peut consister en un liquide, une émulsion, un gel, une graisse ou une pâte, éventuellement chargé d'agents solides tels que des poudres. Le fluide F peut également consister en un mélange de plusieurs fluides de nature différente, notamment en un mélange d'au moins deux fluides choisis parmi ceux listés ci-dessus. A titre d'exemple, le fluide F est une graisse adaptée au graissage d'urgence d'un roulement mécanique. Autrement dit, le fluide F peut être tout type d'agent actif ou de mélange d'agents adaptés aux applications couvertes par l'invention. Les caractéristiques du fluide F, notamment sa viscosité, son potentiel lubrifiant et/ou son potentiel caloporteur, sont de préférence choisies spécifiquement pour l'application visée.

La charge 40 est disposée dans le logement 29 du corps 20, entre la paroi 23 de la base 22 et la paroi 66 du réservoir 60. Le volume exact du logement 29 occupé par la charge 40 dépend de sa composition et donc de l'application visée. Le reste du logement 29 est occupé par de l'air lorsque le capuchon 26 vient couvrir la base 22. En alternative, la charge 40 peut occuper une part plus ou moins importante du logement 29.

La charge 40 est génératrice de gaz de combustion lorsqu'elle brûle au-dessus d'une température prédéterminée. Il est connu de WO-A-2008 107 579 des charges thermo-initiable, dont l'allumage peut résulter d'un apport de chaleur externe ou être déclenché par une commande d'allumage à distance. Des paramètres telles que la quantité et la composition de la charge 40 influencent la cinématique d'injection du fluide F. Le choix du matériau de la base 22, en particulier au niveau de la zone Z24, participe également à la maîtrise du temps de réponse s'écoulant entre l'instant où survient un échauffement anormal du système 1, l'instant de la détection de cet échauffement anormal correspondant à l'allumage de la charge 40 et l'instant de l'injection du fluide F dans le système 1. Une fois l'allumage effectué, la charge 40 brûle rapidement, entre quelques millisecondes à quelques secondes.

La gestion des différents paramètres mentionnés ci-dessus permet de fixer la température de thermo-initiation, de maîtriser la quantité de gaz générés et la pression des gaz avant injection du fluide, de quelques bars à plusieurs centaines de bars, de contrôler le temps de combustion de la charge 40, ainsi que de contrôler la durée et le débit de délivrance du fluide F. Le paramétrage de la cartouche 10 peut notamment être optimisé pour éviter l'injection prématurée du fluide F par des pics intempestifs de température. En d'autres termes, un retard réglable d'allumage de la charge 40 permet de ne pas déclencher l'auto-initiation de la composition lors de surchauffes ponctuelles du système 1 non caractéristiques d'un dysfonctionnement.

La génération de gaz de combustion de la charge 40 peut correspondre à deux modes principaux de mise en oeuvre. Selon un premier mode, le gaz provient uniquement de la combustion d'une charge thermo-initiable 40 génératrice de gaz, mélangeant par exemple thermite et composés générateurs de gaz. Selon un deuxième mode, le gaz provient de la combustion en série de charges superposées, lesquelles comprennent des parts variables de composés thermo-initiables sous l'effet d'un apport de chaleur du système 1, de composés générateurs de gaz et de composés jouant le rôle de relais d'allumage. Par exemple, dans ce deuxième mode, la charge 40 peut comprendre un premier étage thermo-initiateur de combustion, un deuxième étage relais d'allumage et un troisième étage générateur de gaz de combustion.

De préférence, le dispositif 10 est autonome, c'est-à-dire démuni de commande d'allumage. Dans ce cas, l'allumage de la charge 40 est initiable uniquement sous l'effet d'un apport de chaleur, depuis la zone d'échauffement Z24 du corps 20 vers la charge 40.

En alternative, le dispositif 10 peut être équipé d'une commande d'allumage à distance.

En pratique, la montée en pression du fluide F dans le réservoir 60 est assuré par l'opercule 68, le piston 72 et les gaz de combustion. Le fluide F est libéré du réservoir 60 lors du déchirement de l'opercule 68, lorsque la pression du fluide F dans le réservoir 60 augmente au-dessus d'une pression prédéterminée.

Par ailleurs, le banc d'essai B1 peut être utilisé pour tester différents paramétrages de la cartouche 10, lors d'une phase préparatoire de la fabrication de la cartouche 10 qui sera finalement intégrée au système 1, comme expliqué ci-après en lien avec les figures 4, 5 et 7.

Sur la figure 4 est représenté un graphique illustrant le fonctionnement de la cartouche 10, avec un paramétrage donné.

A cet effet, la cartouche 10 est fixée sur le roulement 1, lui-même monté sur le banc d'essai B1, comme montré à la figure 3. Le graphique de la figure 4 représente une température T° en degrés celsius (°C) du roulement 1 en fonction du temps t en minutes (min). Plus précisément, l'évolution de la température T1 est mesurée au niveau de la surface extérieure 4 par une sonde de mesure reliée à un ordinateur, non représentés dans un but de simplification.

Afin de reproduire les applications aéronautiques visées, l'essai est mené avec une forte charge exercée sur le roulement 1, à savoir une pression de contact entre les bagues 2, 6 et les billes 7 qui est comprise entre 2,5 et 2,8 MPa, ainsi qu'une vitesse de rotation élevée autour de l'axe X1, de l'ordre de 10 000 tours / minutes. Le roulement 1 est un roulement fabriqué en matériau 100C6, avec un alésage de 30 millimètres et des billes de diamètres 7,144 millimètres.

La rotation de la bague interne 6 démarre à un instant initial t0, où la surface 4 présente une température T0 correspondant aux conditions ambiantes de température et de pression. La température T° monte rapidement dans le roulement 1 en fonctionnement, puis plus progressivement, jusqu'à l'apparition à un instant tm des premières microsoudures internes au roulement 1. La température T° monte encore jusqu'à un instant t1 correspondant à une température T1 de déclenchement de la cartouche 10. A titre d'exemple, l'instant t1 survient après 30 minutes environ, tandis que la température T1 est de l'ordre de 135°C. Entre l'allumage de la charge 40 et l'injection du fluide F dans le roulement 1, s'écoule une durée de l'ordre de quelques secondes, négligeable à l'échelle du graphique. La divergence thermique, matérialisant l'imminence du grippage du roulement 1 par microsoudures, est stoppée. La température T° redescend aussitôt et ce pendant plusieurs minutes, sous l'effet du fluide F délivré à l'intérieur 5 du roulement 1. Enfin, la température T° recommence à monter à un instant t2, où le fluide F est dissipé et/ou ses effets ne suffisent plus à empêcher l'échauffement du roulement 1. A un instant t3, la température T° atteint de nouveau la température T1, mais sans nouvelle injection de fluide F possible.

A ce stade, les relevés indiquent que l'utilisation de la cartouche 10 a donné au roulement 1 un sursis de fonctionnement durant un intervalle Δt de l'ordre de 30 minutes environ, entre les instants t1 et t2. Autrement dit, la durée de fonctionnement du roulement 1 est doublé grâce à la cartouche 10.

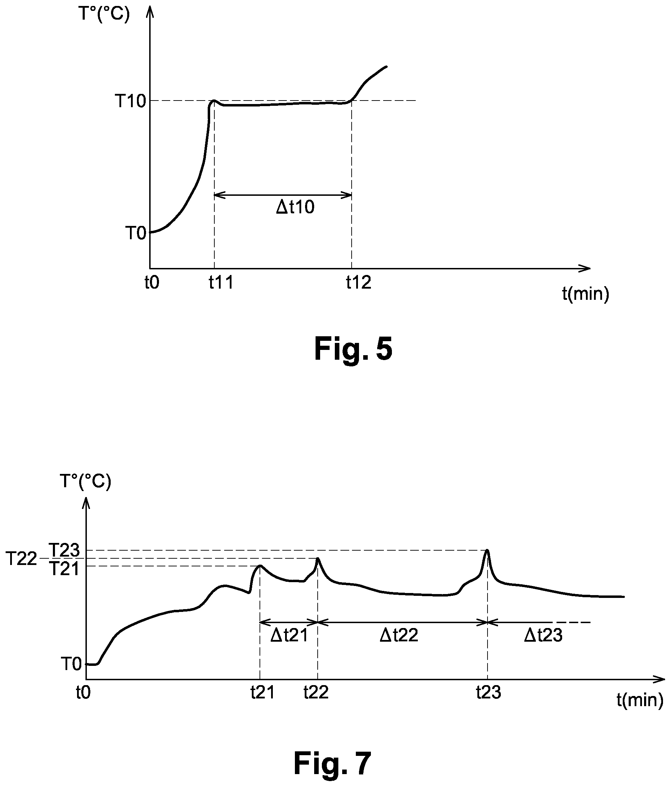

Sur la figure 5 est représenté un graphique illustrant le fonctionnement de la cartouche 10, avec un paramétrage différent de celui de la figure 4.

La cartouche 10 se déclenche à un instant t11 et une température T10 et cesse de produire des effets à un instant t12. A titre d'exemple, l'instant t11 survient après 30 minutes environ, tandis que la température T10 est de l'ordre de 135°C. Entre t11 et t12, durant un intervalle At10, la température T° se maintient sensiblement au niveau d'un plateau légèrement inférieur à T10. Le paramétrage de la cartouche 10 permet une distribution du fluide F dans le roulement 1 durant tout l'intervalle Δt10. Par exemple, la nature du fluide F est telle que sa redistribution dans le roulement 1 est lente et progressive et ses effets sont prolongés durant tout l'intervalle Δt10. Selon un autre exemple, la configuration de la cartouche 10 est telle que l'injection du fluide F dans le roulement est lente et progressive durant tout l'intervalle Δt10. A titre d'exemple, l'intervalle Δt10 est de l'ordre de 30 minutes environ.

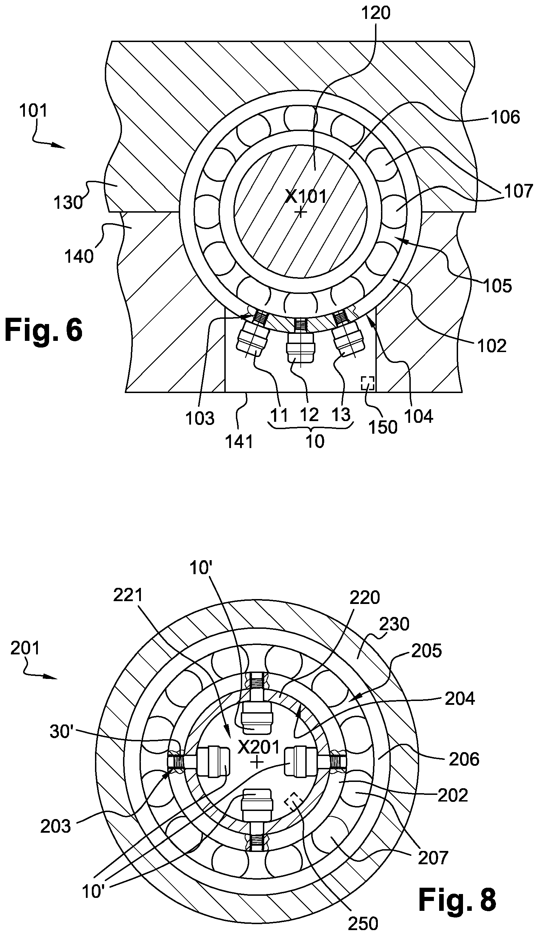

Sur la figure 6 est représenté est un roulement 101, conforme à l'invention, équipé de trois cartouches 10 des figures 1 à 3.

Certains éléments constitutifs du roulement 101 sont comparables aux éléments constitutifs du roulement 1 du premier mode de réalisation, décrit plus haut, et portent les mêmes références augmentées de 100. Il s'agit de la bague externe 102, des orifices taraudés 103, de la surface 104, de l'espace intérieur 105, de la bague interne 106, des billes 107 et de l'axe de rotation X101. Les différences avec le premier mode de réalisation se retrouvent principalement au niveau du montage du roulement 101 et du nombre de cartouches 10.

Un arbre 120 est solidaire de la bague 106, tandis que la bague 102 est montée entre deux parties 130 et 140 d'un équipement partiellement représenté. La partie 140 comporte un logement 141 dans lequel sont montés les cartouches 10. Optionnellement, le logement 141 comporte également une unité électronique miniaturisée 150, représentée schématiquement par un bloc en pointillés, adaptée pour communiquer avec l'extérieur de l'équipement. Cette unité 150 est par exemple un capteur de température en un point donné du système 1, ou une commande d'allumage des charges contenues dans les cartouches 10. Ce montage est représenté à titre d'exemple non limitatif, étant entendu que le roulement 101 peut être adapté à tout type de montages et d'applications.

Les trois cartouches 10 sont fixées dans des orifices respectifs 103 ménagés à travers la bague 102, l'une à proximité de l'autre. Plus précisément, les douilles 30 sont vissées dans les orifices 103, avec les zones Z24 au contact de la surface 104. La proximité entre cartouches 10 résulte notamment d'un compromis entre leur encombrement et les contraintes de réalisation des orifices taraudés 103. De préférence, chacune des cartouches 10 est configurée pour libérer son fluide F à une température donnée ou après une certaine durée d'exposition à une température donnée. Plus précisément, l'ensemble de cartouches 10 comprend une cartouche 11 configurée pour se déclencher en premier, une cartouche 12 configurée pour se déclencher en deuxième et cartouche 13 configurée pour se déclencher en troisième. A cet effet, les charges des différentes cartouches 10 sont de préférence composées de manière différente les unes des autres, afin se déclencher avec un décalage temporel. Egalement, le matériau ou l'épaisseur des corps des différentes cartouches peuvent présenter des différences.

Sur la figure 7 est représenté un graphique illustrant le fonctionnement du système 101 équipé des cartouches 11, 12 et 13.

La cartouche 11 est déclenchée à une température T21 et un instant t21. Après un intervalle Δt21, la cartouche 12 est déclenchée à une température T22 et un instant t22. Après un intervalle Δt22, la cartouche 13 est déclenchée à une température T23 et un instant t23. Après l'instant t21, le sursis de fonctionnement du système 101 se prolonge durant un intervalle Δt23. La température T21 est inférieure à la température T22, qui est inférieure à la température T23. Les températures T21, T22 et en particulier la température T23 sont choisies pour que les cartouches 11, 12 et 13 se déclenchent avant un échauffement critique du système 101. A titre d'exemple, les températures T21, T22 et T23 sont respectivement de l'ordre de 150°C, 155°C et 160°C. Ainsi, le sursis global du système 101 correspond à la somme des intervalles Δt21, Δt22 et Δt23 et est amélioré par rapport à un système équipé d'une unique cartouche 10.

La figure 7 illustre volontairement un paramétrage non optimal des cartouches 10. En effet, l'intervalle Δt21 est relativement réduit par rapport aux intervalles Δt22 et Δt23. Autrement dit, la cartouche 12 se déclenche alors que les effets du fluide F délivré par la cartouche 11 risquent de ne pas être dissipés. De préférence, le paramétrage des cartouches 11 à 13 est tel que chacun des intervalles Δt21, Δt22 et Δt23 est maximisé, sans cartouche qui se déclenche alors que les effets du fluide F délivré par la précédente cartouche ne se sont pas encore dissipés.

Sur la figure 8 est représenté est un roulement 201, conforme à l'invention, équipé de quatre cartouches 10' conformes à un deuxième mode de réalisation de l'invention.

Certains éléments constitutifs du roulement 201 sont comparables aux éléments constitutifs du roulement 101, décrit plus haut, et portent les mêmes références augmentées de 100. Il s'agit de la bague interne 202, des orifices 203 taraudés dans la bague 202, de la surface intérieure 204, de l'espace intérieur 205 du roulement 201, de la bague externe 206, des billes 207 et de l'axe de rotation X201. Les différences avec le précédent mode de réalisation se retrouvent principalement au niveau du montage du roulement 201, ainsi que du nombre et de la configuration des cartouches 10'.

Un arbre creux 220 fixe est solidaire de la bague 202, tandis que la bague 206 est solidaire d'un arbre creux 230 mobile en rotation. Les cartouches 10' sont montés dans un alésage 221 de l'arbre 220, de même qu'une unité 250 optionnelle comparable à l'unité 150 décrite précédemment. Plus précisément, les cartouches 10 sont fixées dans des orifices respectifs 203 ménagés à travers l'arbre 220 et la bague 202, en étant réparties radialement à 90° autour de l'axe X201 du roulement 201 et de l'arbre 220.

La seule différence entre les cartouches 10' et les cartouches 10 est que les cartouches 10' sont munies d'une douille 30' différente de la douille 30. Plus précisément, la douille 30' est plus allongée afin de traverser l'arbre 220, de manière que son filetage puisse être vissé dans l'orifice 203 correspondant. La réactivité des cartouches 10' est légèrement réduite du fait de leur éloignement avec l'intérieur 205 et les éléments mobiles 206, 207 du roulement 201, sans préjudice pour la protection du roulement 201. L'allongement de la douille 30' est ici imposé par le montage particulier du roulement 201.

D'autres montages de systèmes mécaniques équipés de cartouches analogues aux cartouches 10 et 10' peuvent être envisagés sans sortir du cadre de l'invention. Les systèmes peuvent être associés à une ou plusieurs cartouches. En particulier, plusieurs cartouches indépendantes permettent une pluralité d'injections par thermo-initiation à au moins deux températures d'échauffement différentes, en au moins un endroit du système susceptible de subir un échauffement.

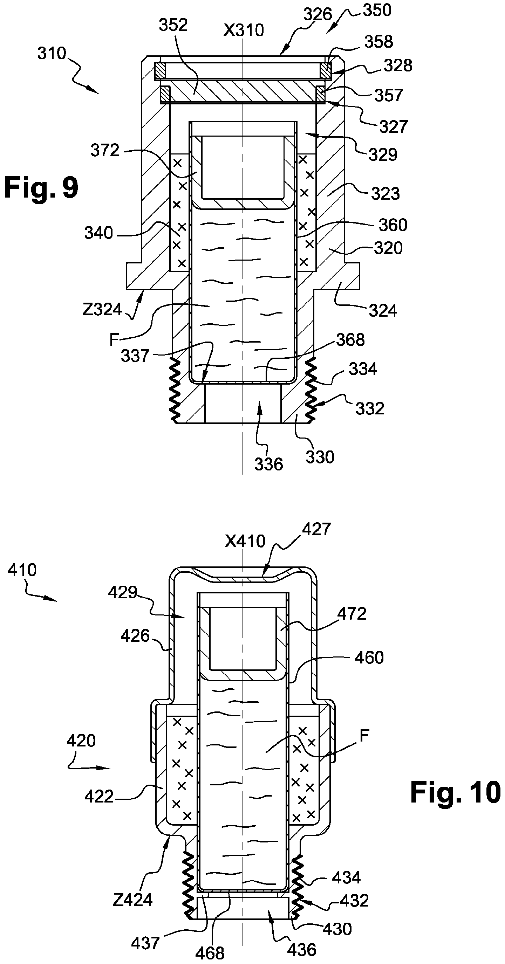

Sur la figure 9 est représenté un troisième mode de réalisation d'un dispositif 310 selon l'invention.

Certains éléments constitutifs de la cartouche 310 sont comparables aux éléments constitutifs de la cartouche 10 du premier mode de réalisation, décrit plus haut, et portent les mêmes références augmentées de 300. Il s'agit du corps 320 centré sur un axe X310, des parois 323 et 324, du logement 329, de la douille filetée 330, du filetage 332, du film 334, du conduit 336, de la charge 340, du réservoir 360, de l'opercule 368, ainsi que du piston 372 de compression du fluide F dans le réservoir 360. Les différences avec le premier mode de réalisation se retrouvent principalement au niveau de la structure du corps 320.

La paroi 324 du corps 320 forme un épaulement en saillie externe par rapport à la paroi 323, de sorte que la zone d'échauffement Z324 est plus étendue que la zone Z24. En alternative, la paroi 324 peut être plus ou moins étendue radialement en fonction, notamment, des contraintes de montage de la cartouche 310. Au niveau de l'opercule 368, le réservoir 360 est en appui contre un épaulement 337 interne à la douille 330. La douille 330 est plus allongée que la douille 30, sans pour autant éloigner l'opercule 368 de la sortie du conduit 336. Lorsque la douille 330 est allongée suivant l'axe X310, le réservoir 360 peut être allongé en fonction. La cartouche 310 est ainsi bien adaptée, par exemple, aux contraintes de montage du système 201 de la figure 8.

Le corps 320 ne comporte pas de capuchon 26 et de partie déformable 27. Le corps 320 comporte une extrémité 326 opposée à la douille 30, qui est munie de moyens 350 de signalement du déclenchement de la charge 340. Du côté de l'extrémité 326, le logement 328 comprend un alésage 327 présentant un diamètre plus important que le diamètre du reste du logement 329. Une rainure annulaire 328 est ménagée dans cet alésage 327. Un joint annulaire 357 est positionné dans l'alésage 327, puis un élément vitré 352 sensiblement annulaire est positionné contre le joint 357. Un autre joint annulaire 358 est ensuite positionné dans la rainure annulaire 328, de sorte que l'élément vitré soit logé entre les joints 357 et 358. L'état de la charge 340 et/ou les gaz de combustion sont ainsi visibles par transparence à travers l'élément vitré 352. Autrement dit, la combustion de la charge 340 peut être détectée visuellement depuis l'extérieur de la cartouche 310, par exemple lors d'une opération de maintenance

En variante non représentée, les moyens de signalement 350 peuvent être configurés de manière différente sans sortir du cadre de l'invention. Par exemple, l'élément 352 n'est pas transparent mais réalisé dans un matériau thermosensible changeant de couleur au contact des gaz de combustion.

Sur la figure 10 est représenté un quatrième mode de réalisation d'une cartouche 410 selon l'invention.

Certains éléments constitutifs de la cartouche 410 sont comparables aux éléments constitutifs de la cartouche 10 du premier mode de réalisation, décrit plus haut, et portent les mêmes références augmentées de 400. Il s'agit du corps 420 centré sur un axe X410, de la base 422, du capuchon 426, de la partie déformable 427, du logement 429, de la douille filetée 430, du filetage 432, du film 434, du conduit 436, de l'épaulement 437, de la charge 440, du réservoir 460, de l'opercule 468, ainsi que du piston 472 de compression du fluide F dans le réservoir 460.

La cartouche 410 combine certains éléments des cartouches 10 et 310. En particulier, les moyens de signalement du déclenchement de la charge 440 sont constitués par la partie déformable 427 intégrée au capuchon 426, tandis que la douille 430 et le réservoir 460 peuvent être plus ou moins allongés suivant l'axe X410.

La cartouche 10 est néanmoins plus compacte que les cartouches 310 et 410, suivant la direction longitudinale définie par son axe central X10.

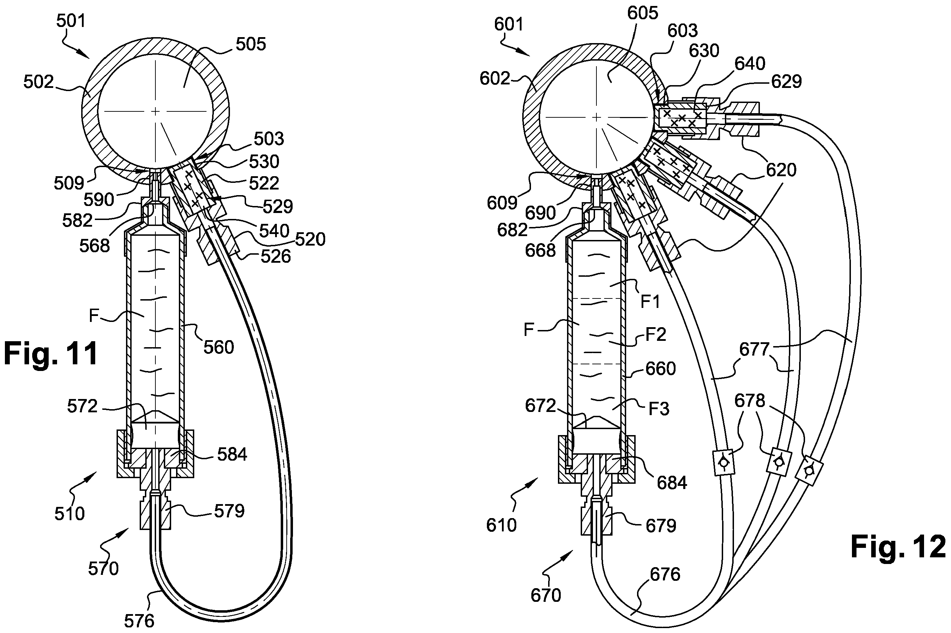

Sur la figure 11 est représenté un cinquième mode de réalisation d'un dispositif 510 équipant un système mécanique 501 selon l'invention.

En particulier, le dispositif 510 est conformé comme une seringue, munie d'une charge 540 et d'un réservoir 560 de fluide F qui sont distants l'un de l'autre.

Certains éléments constitutifs du système 501 et du dispositif 510 sont comparables aux éléments constitutifs du système 1 et du dispositif 10 du premier mode de réalisation, décrit plus haut, et portent les mêmes références augmentées de 500. Il s'agit de la bague externe 502, de l'orifice 503, de l'intérieur 505 du système 501, du corps 520 délimitant un logement 529 de réception d'une charge 540, de la base 522, du capuchon 526, de la douille filetée 530 solidaire de la base 522, du réservoir 560, de l'opercule 568, ainsi que des moyens 570 de compression du fluide F dans le réservoir 560, ces moyens 570 comprenant un piston 572.

Le réservoir 560 n'est pas disposé dans le corps 520. Seule la charge 540 est disposée dans le logement 529 du corps 520, qui est fixée dans l'orifice 503 du système 501 par la douille 530. Le réservoir 560 est munie de son propre corps. Plus précisément, le réservoir 560 est disposé entre un assemblage support 582 situé à son extrémité aval et un assemblage support 584 situé à son extrémité amont, l'amont et l'aval étant définis par la direction de délivrance du fluide F dans le système 501.

L'assemblage 582 comprend l'opercule 568 et une douille filetée 590 adaptée pour être fixée dans un orifice taraudé 509 du système 501. La douille 590 est une douille d'injection du fluide F, tandis que la douille 530 est une douille d'exposition de la charge 540. La douille 590 est comparable à la douille 530, toutes deux comprenant un filetage externe et un film adhésif anti-desserrage. Le diamètre de la douille 590 est inférieur au diamètre de la douille 530 et, de même, le diamètre de l'orifice 509 est inférieur au diamètre de l'orifice 503. La zone d'échauffement du corps 520 inclut la douille 530 et la partie de la base voisine de cette douille 530. Ainsi, la charge 540 et l'opercule 568 sont positionnés à proximité de l'intérieur 505 du système 501, ce qui permet à la fois un allumage rapide de la charge thermo-initiable 540 et une délivrance rapide du fluide F par l'opercule 568, comme dans les précédents modes de réalisation.

En variante non représentée à la figure 11, l'opercule 568 est positionné dans la douille 590, dans un volume délimité par les contours du filetage de cette douille 590.

L'assemblage 584 forme un capuchon obturant l'extrémité amont du réservoir 560, laquelle est munie du piston 572. Comme le logement 529 est éloigné du réservoir 560, un conduit 576 reliant le logement 529 et l'assemblage 584 est prévu pour le guidage des gaz de combustion. Le conduit 576 s'étend depuis le capuchon 526 conformé comme un raccord pneumatique vers l'assemblage 584, auquel est intégré un autre raccord pneumatique 579. Autrement dit, les moyens intermédiaires 570 de compression du fluide F dans le réservoir 560 comprennent le piston 572, le conduit de guidage 576, le raccord 579 et l'assemblage 584.

De manière avantageuse, le dispositif 510 peut comprendre une quantité importante de fluide F contenu dans le réservoir 560, de manière à pouvoir protéger le système 501 d'un échauffement critique pendant une durée prolongée. A cet effet, l'assemblage 582, l'opercule 568 et la douille 590 peuvent être configurées pour contrôler le débit d'écoulement du fluide F hors du réservoir 560. Ainsi, lorsque la charge 540 est déclenchée et que les gaz de combustion viennent appuyer sur le piston 572 en traversant le conduit 576, l'injection de fluide F dans le système 501 peut être régulée.

Le dispositif 510 est néanmoins plus encombrant que les cartouches miniaturisées 10, 10', 310 et 410. Autrement dit, le dispositif 510 convient pour des applications particulières, où l'encombrement n'est pas un problème déterminant.

Sur la figure 12 est représenté un sixième mode de réalisation d'un dispositif 610 équipant un système mécanique 601 selon l'invention.

En particulier, le dispositif 610 est conformé comme une seringue, munie de plusieurs charges 640 distantes du réservoir 560 de fluide F.

Certains éléments constitutifs du système 601 et du dispositif 610 sont comparables aux éléments constitutifs du système 501 et du dispositif 510 du cinquième mode de réalisation, décrit plus haut, et portent les mêmes références augmentées de 100. Il s'agit de la bague externe 602, de l'orifice 603, de l'intérieur 605 du système 601, du corps 620 délimitant un logement 629 de réception d'une charge 640, de la douille filetée 530 solidaire du corps 620, du réservoir 660, de l'opercule 668, des moyens 670 de compression du fluide F dans le réservoir 660, du piston 672, du conduit 676, du raccord 679, des assemblages support 682 et 684, ainsi que de la douille filetée 690.

Le dispositif 610 comprend trois corps 620, chacun comprenant un logement 629 contenant une charge 640. De préférence, les charges 640 sont composées de manière différente les unes des autres, afin de présenter un déclenchement décalé dans le temps, comme dans le mode de réalisation des figures 6 et 8. Chaque corps 620 est fixé par une douille filetée 630 dans un orifice 603 ménagé dans la bague 602 du système 601. Un conduit 677 s'étend hors de chaque logement 629 jusqu'au conduit principal 676. Ainsi, chaque logement 629 est relié à l'assemblage 684 supportant le réservoir 660 et au piston 672. De préférence, chaque conduit 677 est muni d'une valve unidirectionnelle, de sorte que les gaz de combustion ne puissent pas refluer dans les autres conduits 677.

En particulier, les charges 640, le fluide F et les moyens de délivrance du fluide F peuvent être configurés pour permettre plusieurs injections successives de fluide F dans le système 601. Le volume de fluide F dans le réservoir 660 peut être divisé en plusieurs volumes F1, F2 et F3 équivalents ou distincts. Lorsque la première charge se déclenche, le volume F1 est injecté dans le système 601 puis l'injection est freinée, voire stoppée, par exemple du fait de la résistance opposée par le piston 672 aux gaz de combustion. Lorsque la deuxième charge se déclenche, le volume F2 est injecté à son tour dans le système 601. Lorsque la troisième charge se déclenche, le volume F3 est injecté à son tour dans le système 601.

D'autres dispositifs étagés peuvent être réalisés, avec une structure différente mais un fonctionnement comparable au dispositif 660, sans sortir du cadre de l'invention.

En variante non représentée, chaque dispositif selon l'invention peut être muni d'une unité électronique miniaturisée de transfert d'informations vers une unité centrale distante, par communication radio ou filaire. Par exemple, l'unité miniaturisée peut comprendre un capteur de température et/ou un capteur de pression disposé dans le logement de la charge. L'unité miniaturisée peut également servir de moyens de signalement du déclenchement de la charge. L'unité miniaturisée peut être alimentée en énergie par des moyens internes ou, en alternative, par l'énergie thermique libérée par la combustion de la charge.

Selon une autre variante non représentée, les dispositifs et en particulier les cartouches peuvent être positionnées sur les faces avant des roulements, ou en tout point des systèmes mécaniques adapté à la présente application. Dans le cas où le système mécanique est une rotule, le dispositif peut par exemple être positionné sur un logement ménagé dans un corps d'embout.

Selon une autre variante non représentée, au moins un élément de freinage positif, par exemple du type frein tôle ou fil à freiner, peut être intégré au système 1. Chaque dispositif peut être équipé d'un tel élément, afin d'empêcher son dévissage sous l'action des vibrations en fonctionnement du système 1. Cet élément est alors complémentaire des moyens de fixation, à savoir la douille filetée et le film adhésif anti-desserrage.

En outre, les caractéristiques techniques des différents modes de réalisation peuvent être, en totalité ou pour certaines d'entre elles, combinées entre elles. Ainsi, le dispositif d'injection et le système mécanique peuvent être adaptés à une application particulière, notamment en termes de coût, d'encombrement et de contraintes opérationnelles.

Quel que soit le mode de réalisation, l'invention peut avantageusement être mise en oeuvre dans des contextes de sauvegarde, de protection ou de maintenance préventive de systèmes mécaniques susceptibles de subir des échauffements. En particulier, l'invention présente une fiabilité et une efficacité adaptée aux exigences de sécurité en vigueur dans le domaine aéronautique.

particulier, l'invention présente une fiabilité et une efficacité adaptée aux exigences de sécurité en vigueur dans le domaine aéronautique.

## Revendications

1. Dispositif (10 ; 10' ; 310 ; 410 ; 510 ; 610) d'injection d'un fluide (F) dans un système mécanique (1 ; 101 ; 201 ; 301 ; 401 ; 501 ; 601) susceptible de subir un échauffement, le dispositif comprenant au moins :
- un corps (20 ; 320 ; 420 ; 520 ; 620) contenant une charge thermo-initiable (40 ; 340 ; 440 ; 540 ; 640) génératrice de gaz de combustion, un allumage de la charge étant initiable sous l'action d'une commande d'allumage et/ou sous l'effet d'un apport de chaleur, depuis une zone d'échauffement (Z24 ; Z324 ; Z424) du corps, vers la charge,
- un réservoir (60 ; 360 ; 460 ; 560 ; 660) contenant le fluide (F),
- des moyens (30, 32, 34 ; 30' ; 330, 332, 334 ; 430, 432, 434 ; 530, 590 ; 630, 690) de fixation du dispositif (10 ; 10' ; 310 ; 410 ; 510 ; 610) au système mécanique (1 ; 101 ; 201 ; 301 ; 401 ; 501 ; 601), les moyens de fixation étant adaptés pour mettre le réservoir (60 ; 360 ; 460 ; 560 ; 660) en communication fluidique avec le système mécanique, et
- des moyens (36, 68 ; 336, 368 ; 436, 468 ; 568 ; 668) de délivrance du fluide (F) pressurisé hors du réservoir (60 ; 360 ; 460 ; 560 ; 660) par l'action, directe ou via des moyens intermédiaires (70, 72 ; 372 ; 472 ; 570, 572, 576, 579, 584 ; 670, 672, 676, 678, 679, 684), des gaz de combustion, les moyens (36, 68 ; 336, 368 ; 436, 468 ; 568 ; 668) de délivrance du fluide (F) pressurisé hors du réservoir (60 ; 360 ; 460 ; 560 ; 660) comprennent un opercule (68 ; 368 ; 468 ; 568 ; 668) non fragmentable, qui obture initialement le réservoir et se rompt lorsque la pression du fluide (F) dans le réservoir (60 ; 360 ; 460 ; 560 ; 660) dépasse un seuil de pression prédéterminé,
**caractérisé en ce que** les moyens de fixation (30, 32, 34 ; 30' ; 330, 332, 334 ; 430, 432, 434 ; 530, 590 ; 630, 690) comprennent au moins une douille d'injection (30 ; 30' ; 330 ; 430 ; 590 ; 690) munie d'un filetage externe (32 ; 332 ; 432) revêtu d'un film adhésif anti-desserrage (34 ; 334 ; 434),
**en ce que** la douille d'injection (30 ; 30' ; 330 ; 430 ; 530, 590 ; 630, 690) est constituée par un matériau présentant, d'une part, une limite d'élasticité à 0,2% de déformation Re_{0,2} comprise entre 500 et 700 MPa et, d'autre part, une résistance à la traction Rmax comprise entre 700 et 900 MPa,
**en ce que** l'opercule (68 ; 368 ; 468 ; 568 ; 668) est localisé dans un volume délimité par le filetage externe (32 ; 332 ; 432) de la douille d'injection (30 ; 30' ; 330 ; 430 ; 590 ; 690), et
**en ce que** le débit de fluide (F) pressurisé hors du réservoir (60 ; 360 ; 460 ; 560 ; 660) est régulé, avec :
- soit une délivrance du fluide (F) régulière et continue sur une durée de plusieurs minutes ;
- soit une délivrance du fluide (F) par intermittence, par injections successives, sur plusieurs minutes.

2. Dispositif (10 ; 10' ; 310 ; 410) selon la revendication 1, **caractérisé en ce que** :
- le réservoir (60 ; 360 ; 460) est logé dans le corps (20 ; 320 ; 420) contenant la charge (40 ; 340 ; 440),
- un piston mobile (72 ; 372 ; 472) est interposé entre le fluide (F) et la charge (40 ; 340 ; 440), et
- la douille d'injection (30 ; 30' ; 330 ; 430) s'étend en saillie depuis le corps (20 ; 320 ; 420) au niveau de la zone d'échauffement (Z24 ; Z324 ; Z424) du corps (20).

3. Dispositif (510 ; 610) selon la revendication 1, **caractérisé en ce que** :
- le réservoir (560 ; 660) est distinct du ou des corps (520 ; 620) contenant la ou les charges (540 ; 640),
- les moyens intermédiaires (570, 572, 576, 579, 584 ; 670, 672, 676, 678, 679, 684) de compression du fluide (F) dans le réservoir (560 ; 660) comprennent au moins un conduit (576 ; 676, 677) de guidage des gaz de combustion jusqu'à un piston mobile (572 ; 672) en contact avec le fluide (F), et
- la douille d'injection (590 ; 690) s'étend en saillie depuis le réservoir (560 ; 660).

4. Dispositif (10 ; 10' ; 310 ; 410) selon l'une des revendications précédentes, **caractérisé en ce que** le dispositif (10 ; 10' ; 310 ; 410) comprend des moyens (27 ; 350 ; 427) de signalement de la combustion de la charge (40 ; 340 ; 440).

5. Dispositif (10 ; 10' ; 310 ; 410; 510 ; 610) selon l'une des revendications précédentes, **caractérisé en ce que** le dispositif (10 ; 10' ; 310 ; 410 ; 510 ; 610) comprend une unité électronique miniaturisée (90) de transfert d'informations vers une unité centrale distante.

6. Dispositif (10 ; 10' ; 310 ; 410 ; 510 ; 610) selon l'une des revendications précédentes, **caractérisé en ce que** le dispositif (10 ; 10' ; 310 ; 410 ; 510 ; 610) est autonome, l'allumage de la charge (40 ; 340 ; 440 ; 540 ; 640) étant initiable uniquement sous l'effet d'un apport de chaleur, depuis une zone d'échauffement (Z24 ; Z324 ; Z424) du corps (20 ; 320 ; 420 ; 520 ; 620), vers la charge (40 ; 340 ; 440 ; 540 ; 640).

7. Système mécanique (1 ; 101 ; 201 ; 301 ; 401 ; 501 ; 601), par exemple un roulement, un palier ou une rotule, **caractérisé en ce que** le système est équipé d'au moins un dispositif (10 ; 10' ; 310 ; 410 ; 510 ; 610) selon l'une des revendications 1 à 6.

8. Système mécanique (1 ; 101 ; 201 ; 301 ; 401 ; 501 ; 601) selon la revendication 7, **caractérisé en ce que** la douille d'injection (30 ; 30' ; 330 ; 430 ; 590 ; 690) du dispositif (10 ; 10' ; 310 ; 410 ; 510 ; 610) est vissée dans un orifice taraudé (3 ; 103 ; 203 ; 303 ; 403 ; 509 ; 609) ménagé dans le système mécanique (1 ; 101 ; 201 ; 301 ; 401 ; 501 ; 601).

9. Système mécanique (1 ; 101 ; 201 ; 301 ; 401 ; 501 ; 601) selon la revendication 8, **caractérisé en ce que** l'orifice taraudé (3 ; 103 ; 203 ; 303 ; 403 ; 509 ; 609) est ménagé dans une partie (2 ; 102 ; 302 ; 402 ; 502 ; 602) du système (1 ; 101 ; 201 ; 301 ; 401 ; 501 ; 601) réalisée dans un acier présentant une résistance à la traction comprise entre 2400 et 2600 mégapascals (MPa), encore de préférence de l'ordre de 2500 MPa.

10. Système mécanique (101 ; 201) selon l'une des revendications 7 à 9, **caractérisé en ce qu'**il est équipé de plusieurs dispositifs (10 ; 10') munis chacun d'au moins une charge (40) présentant une température de déclenchement différente des autres charges.

11. Système mécanique (1 ; 101 ; 201 ; 301 ; 401 ; 501 ; 601) selon l'une des revendications 7 à 10, **caractérisé en ce qu'**au moins un élément de freinage positif coopérant avec un dispositif (10 ; 10' ; 310 ; 410 ; 510 ; 610) est intégré au système mécanique (1 ; 101 ; 201 ; 301 ; 401 ; 501 ; 601), l'élément de freinage positif étant par exemple du type frein tôle ou fil à freiner.

## Patentansprüche

1. Vorrichtung (10; 10'; 310; 410; 510; 610) zur Einspritzung eines Fluids (F) in ein mechanisches System (1; 101; 201; 301; 401; 501; 601), das eine Erwärmung erfahren kann, wobei die Vorrichtung wenigstens umfasst:
- einen Körper (20; 320; 420; 520; 620), der eine thermisch auslösbare Ladung (40; 340; 440; 540; 640) enthält, die ein Verbrennungsgas erzeugt, wobei eine Zündung der Ladung unter der Einwirkung eines Zündbefehls und/oder unter der Wirkung einer Zufuhr von Wärme von einem Erwärmungsbereich (Z24; Z324; Z424) des Körpers zur Ladung auslösbar ist,
- einen Behälter (60; 360; 460; 560; 660), der das Fluid (F) enthält,
- Mittel (30, 32, 34; 30'; 330, 332, 334; 430, 432, 434; 530, 590; 630, 690) zur Befestigung der Vorrichtung (10; 10'; 310; 410; 510; 610) an dem mechanischen System (1; 101; 201; 301; 401; 501; 601), wobei die Befestigungsmittel dafür ausgelegt sind, den Behälter (60; 360; 460; 560; 660) in Fluidverbindung mit dem mechanischen System zu bringen, und
- Mittel (36, 68; 336, 368; 436, 468; 568; 668) zum Austrag des druckbeaufschlagten Fluids (F) aus dem Behälter (60; 360; 460; 560; 660) unter der direkten oder über Zwischenmittel (70, 72; 372; 472; 570, 572, 576, 579, 584; 670, 672, 676, 678, 679, 684) erfolgenden Einwirkung der Verbrennungsgase, wobei die Mittel (36, 68; 336, 368; 436, 468; 568; 668) zum Austrag des druckbeaufschlagten Fluids (F) aus dem Behälter (60; 360; 460; 560; 660) eine nicht splitterbare Abdeckung (68; 368; 468; 568; 668) umfassen, welche zunächst den Behälter verschließt und welche bricht, wenn der Druck des Fluids (F) im Behälter (60; 360; 460; 560; 660) einen vorgegebenen Schwellenwert überschreitet,
**dadurch gekennzeichnet, dass** die Befestigungsmittel (30, 32, 34; 30'; 330, 332, 334; 430, 432, 434; 530, 590; 630, 690) wenigstens eine Einspritzhülse (30; 30'; 330; 430; 590; 690) umfassen, die mit einem Außengewinde (32; 332; 432) versehen ist, das mit einem Klebstofffilm zum Schutz vor Lockerung (34; 334; 434) überzogen ist,
dadurch, dass die Einspritzhülse (30; 30'; 330; 430; 530, 590; 630, 690) aus einem Material besteht, das einerseits eine 0,2 %-Elastizitätsgrenze Re₀,₂ zwischen 500 und 700 MPa und andererseits eine Zugfestigkeit Rmax zwischen 700 und 900 MPa aufweist,
dadurch, dass die Abdeckung (68; 368; 468; 568; 668) in einem Volumen angeordnet ist, das von dem Außengewinde (32; 332; 432) der Einspritzhülse (30; 30'; 330; 430; 590; 690) begrenzt wird, und dadurch, dass der Durchflussstrom des druckbeaufschlagten Fluids (F) aus dem Behälter (60; 360; 460; 560; 660) hinaus geregelt wird, mit
- entweder einem gleichmäßigen und kontinuierlichen Austrag des Fluids (F) über eine Dauer von mehreren Minuten;
- oder einem intermittierenden Austrag des Fluids (F) durch aufeinander folgende Einspritzungen über mehrere Minuten.

2. Vorrichtung (10; 10'; 310; 410) nach Anspruch 1, **dadurch gekennzeichnet, dass**:
- der Behälter (60; 360; 460) in dem Körper (20; 320; 420) aufgenommen ist, der die Ladung (40; 340; 440) enthält,
- ein beweglicher Kolben (72; 372; 472) zwischen dem Fluid (F) und der Ladung (40; 340; 440) angeordnet ist, und
- die Einspritzhülse (30; 30'; 330; 430) sich am Erwärmungsbereich (Z24; Z324; Z424) des Körpers (20) vom Körper (20; 320; 420) aus vorstehend erstreckt.

3. Vorrichtung (510; 610) nach Anspruch 1, **dadurch gekennzeichnet, dass**:
- der Behälter (560; 660) von dem Körper oder den Körpern (520; 620), welche die Ladung oder die Ladungen (540; 640) enthalten, verschieden ist,
- die Zwischenmittel (570, 572, 576, 579, 584; 670, 672, 676, 678, 679, 684) zur Kompression des Fluids (F) im Behälter (560; 660) wenigstens eine Leitung (576; 676, 677) zur Führung der Verbrennungsgase bis zu einem beweglichen Kolben (572; 672), der sich mit dem Fluid (F) in Kontakt befindet, umfassen, und
- die Einspritzhülse (590; 690) sich vom Behälter (560; 660) aus vorstehend erstreckt.

4. Vorrichtung (10; 10'; 310; 410) nach einem der vorhergehenden Ansprüche, **dadurch gekennzeichnet, dass** die Vorrichtung (10; 10'; 310; 410) Mittel (27; 350; 427) zur Signalisierung der Verbrennung der Ladung (40; 340; 440) umfasst.

5. Vorrichtung (10; 10'; 310; 410; 510; 610) nach einem der vorhergehenden Ansprüche, **dadurch gekennzeichnet, dass** die Vorrichtung (10; 10'; 310; 410; 510; 610) eine miniaturisierte Elektronikeinheit (90) zur Übertragung von Informationen zu einer entfernten Zentraleinheit umfasst.

6. Vorrichtung (10; 10'; 310; 410; 510; 610) nach einem der vorhergehenden Ansprüche, **dadurch gekennzeichnet, dass** die Vorrichtung (10; 10'; 310; 410; 510; 610) autonom ist, wobei die Zündung der Ladung (40; 340; 440; 540; 640) ausschließlich unter der Wirkung einer Zufuhr von Wärme von einem Erwärmungsbereich (Z24; Z324; Z424) des Körpers (20; 320; 420; 520; 620) zur Ladung (40; 340; 440; 540; 640) auslösbar ist.

7. Mechanisches System (1; 101; 201; 301; 401; 501; 601), zum Beispiel Wälzlager, Achslager oder Kugelgelenk, **dadurch gekennzeichnet, dass** das System mit wenigstens einer Vorrichtung (10; 10'; 310; 410; 510; 610) nach einem der Ansprüche 1 bis 6 ausgestattet ist.

8. Mechanisches System (1; 101; 201; 301; 401; 501; 601) nach Anspruch 7, **dadurch gekennzeichnet, dass** die Einspritzhülse (30; 30'; 330; 430; 590; 690) der Vorrichtung (10; 10'; 310; 410; 510; 610) in eine Gewindebohrung (3; 103; 203; 303; 403; 509; 609) eingeschraubt ist, die in dem mechanischen System (1; 101; 201; 301; 401; 501; 601) ausgebildet ist.

9. Mechanisches System (1; 101; 201; 301; 401; 501; 601) nach Anspruch 8, **dadurch gekennzeichnet, dass** die Gewindebohrung (3; 103; 203; 303; 403; 509; 609) in einem Teil (2; 102; 302; 402; 502; 602) des Systems (1; 101; 201; 301; 401; 501; 601) ausgebildet ist, der aus einem Stahl hergestellt ist, der eine Zugfestigkeit zwischen 2400 und 2600 Megapascal (MPa) und vorzugsweise in der Größenordnung von 2500 MPa aufweist.

10. Mechanisches System (101; 201) nach einem der Ansprüche 7 bis 9, **dadurch gekennzeichnet, dass** es mit mehreren Vorrichtungen (10; 10') ausgestattet ist, die jeweils mit wenigstens einer Ladung (40) versehen sind, die eine von den anderen Ladungen verschiedene Auslösetemperatur aufweist.

11. Mechanisches System (1; 101; 201; 301; 401; 501; 601) nach einem der Ansprüche 7 bis 10, **dadurch gekennzeichnet, dass** wenigstens ein positives Bremselement, das mit einer Vorrichtung (10; 10'; 310; 410; 510; 610) zusammenwirkt, in das mechanische System (1; 101; 201; 301; 401; 501; 601) integriert ist, wobei das positive Bremselement zum Beispiel vom Typ eines Bremsbleches oder Bremsdrahtes ist.

## Claims

1. Device (10; 10'; 310; 410; 510; 610) for injecting a fluid (F) into a mechanical system (1; 101; 201; 301; 401; 501; 601) liable to experience heating, the device comprising at least:
- a body (20; 320; 420; 520; 620) containing a thermally initiable charge (40; 340; 440; 540; 640) that generates combustion gases, ignition of the charge being initiable under the action of an ignition command and/or under the effect of an application of heat, from a heated-up zone (Z24; Z324; Z424) of the body, to the charge,
- a reservoir (60; 360; 460; 560; 660) containing the fluid (F),
- means (30, 32, 34; 30'; 330, 332, 334; 430, 432, 434; 530, 590; 630, 690) for attaching the device (10; 10'; 310; 410; 510; 610) to the mechanical system (1; 101; 201; 301; 401; 501; 601), the attachment means being designed to place the reservoir (60; 360; 460; 560; 660) in fluidic communication with the mechanical system, and
- means (36, 68; 336, 368; 436, 468; 568; 668) for delivering the pressurized fluid (F) from the reservoir (60; 360; 460; 560; 660) by the direct action or the action via intermediate means (70, 72; 372; 472; 570, 572, 576, 579, 584; 670, 672, 676, 678, 679, 684) of the combustion gases, the means (36, 68; 336, 368; 436, 468; 568; 668) for delivering the pressurized fluid (F) from the reservoir (60; 360; 460; 560; 660) comprising a non-fragmentable rupture seal (68; 368; 468; 568; 668), which initially closes the reservoir and ruptures when the pressure of the fluid (F) in the reservoir (60; 360; 460; 560; 660) exceeds a predetermined pressure threshold,
**characterized in that** the attachment means (30, 32, 34; 30'; 330, 332, 334; 430, 432, 434; 530, 590; 630, 690) comprise at least one injection fitting (30; 30'; 330; 430; 590; 690) equipped with an external screw thread (32; 332; 432) coated with an adhesive thread-locking film (34; 334; 434),
**in that** the injection fitting (30; 30'; 330; 430; 530, 590; 630, 690) is made of a material which, on the one hand, has an elastic limit at 0.2% strain Re_{0.2} comprised between 500 and 700 MPa and, on the other hand, a tensile strength Rmax comprised between 700 and 900 MPa,
**in that** the rupture seal (68; 368; 468; 568; 668) is located in a volume delimited by the external screw thread (32; 332; 432) of the injection fitting (30; 30'; 330; 430; 590; 690), and
**in that** the flow rate of pressurized fluid (F) leaving the reservoir (60; 360; 460; 560; 660) is regulated with:
- either the fluid (F) being delivered evenly and continuously over a duration of several minutes;
- or the fluid (F) being delivered intermittently, in successive injections over several minutes.

2. Device (10; 10'; 310; 410) according to Claim 1, **characterized in that**:
- the reservoir (60; 360; 460) is housed within the body (20; 320; 420) containing the charge (40; 340; 440),
- a mobile piston (72; 372; 472) is interposed between the fluid (F) and the charge (40; 340; 440), and
- the injection fitting (30; 30'; 330; 430) extends as a projection from the body (20; 320; 420) in the region of the heated-up zone (Z24; Z324; Z424) of the body (20).

3. Device (510; 610) according to Claim 1, **characterized in that**:
- the reservoir (560; 660) is distinct from the body or bodies (520; 620) containing the charge or charges (540; 640),
- the intermediate means (570, 572, 576, 579, 584; 670, 672, 676, 678, 679, 684) for compressing the fluid (F) in the reservoir (560; 660) comprise at least one pipe (576; 676, 677) for guiding the combustion gases as far as a mobile piston (572; 672) in contact with the fluid (F), and
- the injection fitting (590; 690) extends as a projection from the reservoir (560; 660).

4. Device (10; 10'; 310; 410) according to one of the preceding claims, **characterized in that** the device (10; 10'; 310; 410) comprises means (27; 350; 427) for signalling the combustion of the charge (40; 340; 440).

5. Device (10; 10'; 310; 410; 510; 610) according to one of the preceding claims, **characterized in that** the device (10; 10'; 310; 410; 510; 610) comprises a miniaturized electronic unit (90) for transferring data to a remote central unit.

6. Device (10; 10'; 310; 410; 510; 610) according to one of the preceding claims, **characterized in that** the device (10; 10'; 310; 410; 510; 610) is autonomous, the ignition of the charge (40; 340; 440; 540; 640) being initiable only under the effect of an application of heat, from a heated-up zone (Z24; Z324; Z424) of the body (20; 320; 420; 520; 620) to the charge (40; 340; 440; 540; 640).

7. Mechanical system (1; 101; 201; 301; 401; 501; 601), for example a rolling bearing, a plain bearing or a ball joint, **characterized in that** the system is equipped with at least one device (10; 10'; 310; 410; 510; 610) according to one of Claims 1 to 6.

8. Mechanical system (1; 101; 201; 301; 401; 501; 601) according to Claim 7, **characterized in that** the injection fitting (30; 30'; 330; 430; 590; 690) of the device (10; 10'; 310; 410; 510; 610) is screwed into a tapped orifice (3; 103; 203; 303; 403; 509; 609) formed in the mechanical system (1; 101; 201; 301; 401; 501; 601).

9. Mechanical system (1; 101; 201; 301; 401; 501; 601) according to Claim 8, **characterized in that** the tapped orifice (3; 103; 203; 303; 403; 509; 609) is formed in a part (2; 102; 302; 402; 502; 602) of the system (1; 101; 201; 301; 401; 501; 601) made from a steel having a tensile strength comprised between 2400 and 2600 megapascals (MPa), and more preferably still of the order of 2500 MPa.

10. Mechanical system (101; 201) according to one of Claims 7 to 9, **characterized in that** it is equipped with several devices (10; 10') each equipped with at least one charge (40) having a different triggering temperature from the other charges.

11. Mechanical system (1; 101; 201; 301; 401; 501; 601) according to one of Claims 7 to 10, **characterized in that** at least one positive-locking element collaborating with a device (10; 10'; 310; 410; 510; 610) is incorporated into the mechanical system (1; 101; 201; 301; 401; 501; 601), the positive-locking element being, for example, of the locking plate or locking wire type.
